# FASCICULE DE BREVET EUROPEEN

(11) **EP 3 539 867 B1**
(45) Date de publication et mention de la délivrance du brevet: **16.09.2020**
(21) Numéro de dépôt: 19162598.7
(22) Date de dépôt: 13.03.2019
(51) Int. Cl.: B64C 25/20, B64C 25/26

(54) **PROCEDE DE MANOEUVRE D'UN ATTERRISSEUR D'AERONEF ENTRE UNE POSITION DEPLOYEE ET UNE POSITION RETRACTEE**
MANÖVRIERVERFAHREN FÜR EIN FAHRWERK ZWISCHEN AUSGEFAHRENE UND EINGEFAHRENE POSITION
MANEUVERING METHOD FOR A LANDING GEAR BETWEEN A DEPLOYED AND A RETRACTED POSITION

(30) Priorité: 16.03.2018 FR 1852268; 19.07.2018 FR 1856723
(43) Date de publication de la demande: 18.09.2019
(73) Titulaire: Safran Landing Systems, 78140 Vélizy-Villacoublay (FR)
(72) Inventeur: EUZET, Bertrand, 78140 Vélizy-Villacoublay (FR); QUENERCH'DU, Marc, 78140 Vélizy-Villacoublay (FR); DUBACHER, Bertrand, 78140 Vélizy-Villacoublay (FR); HENRION, Philippe, 78140 Vélizy-Villacoublay (FR); DUBOIS, Sébastien, 59500 Douai (FR)
(74) Mandataire: Lavialle, Bruno François Stéphane

(56) Documents cités:
- FR-A1- 2 946 319
- FR-A1- 3 022 886
- JP-A- S59 179 498
- US-A1- 2017 057 625

## Description

L'invention concerne un procédé de manœuvre d'un atterrisseur d'aéronef entre une position déployée et une position rétractée.

### ARRIERE PLAN DE L'INVENTION

On connaît des atterrisseurs d'aéronef comprenant une jambe montée articulée sur une structure de l'aéronef pour être mobile entre une position déployée et une position rétractée. La jambe est stabilisée en position déployée au moyen d'un organe de contreventement comportant souvent deux membres articulés entre eux, l'un des membres étant attelé à la jambe et l'autre attelé à la structure de l'aéronef, les deux membres étant maintenus en position sensiblement alignée par un organe de stabilisation formant verrou qui peut être déverrouillé pour permettre le relevage de la jambe de la position déployée à la position rétractée. Pour ce faire, de tels atterrisseurs comportent en général un actionneur de déverrouillage pour déverrouiller l'organe de stabilisation et briser l'alignement de l'organe de contreventement, et un actionneur de manoeuvre pour relever la jambe vers la position rétractée.

Cependant, il est possible de n'utiliser qu'un seul actionneur assurant les deux fonctions. On a par exemple proposé dans le document FR2946319 d'utiliser un actionneur de manœuvre de type électromécanique rotatif attelé à l'un des bras de l'organe de stabilisation de la contrefiche en position alignée pour à la fois assurer la manœuvre de l'atterrisseur et le déverrouillage de l'organe de stabilisation.

Le maintien de la jambe dans la position rétractée requiert généralement l'usage d'un boîtier d'accrochage solidaire de la structure de l'aéronef et comportant un crochet dans lequel une olive solidaire de la jambe s'engage lors de son arrivée en position rétractée. On connaît cependant des solutions de réalignement dans lequel les deux membres de l'organe de contreventement ou les deux membres de l'organe de stabilisation sont en position alignée quand l'atterrisseur est en position rétractée, ce qui permet la suppression du boîtier d'accrochage.

### OBJET DE L'INVENTION

L'invention vise à proposer un procédé de manoeuvre d'un atterrisseur d'aéronef entre une position déployée et une position rétractée ne faisant usage que d'un seul actionneur.

### PRESENTATION DE L'INVENTION

En vue de la réalisation de ce but, on propose un procédé de manœuvre d'un atterrisseur d'aéronef entre une position déployée et une position rétractée, l'atterrisseur comportant une jambe montée articulée sur une structure de l'aéronef pour être mobile entre la position déployée et la position rétractée, en étant stabilisée en position déployée au moyen d'un organe de contreventement comportant deux membres articulés entre eux, l'un des membres étant attelé à la jambe et l'autre attelé à la structure de l'aéronef. Selon l'invention, on agence sur l'aéronef un actionneur rotatif comportant des première et seconde manivelles montées librement tournantes autour d'un même axe de rotation mais dont la position angulaire relative est commandable, la première manivelle étant reliée à l'organe de contreventement par une première bielle tandis que la deuxième manivelle est reliée à la jambe par une deuxième bielle, de sorte que les manivelles présentent :
- une première position angulaire relative dans laquelle la première manivelle et la première bielle sont amenées dans un premier alignement lorsque la jambe est en position déployée et stabilisent ainsi les membres de l'organe de contreventement en position sensiblement alignée ;
- une deuxième position angulaire relative dans laquelle la deuxième manivelle et la deuxième bielle sont amenées dans un deuxième alignement lorsque la jambe est en position rétractée et stabilisent ainsi la jambe dans la position rétractée.

Une telle disposition lie de façon univoque la position angulaire relative de la jambe par rapport à la structure de l'aéronef et la position angulaire relative des deux manivelles. Selon l'invention, on fait en sorte que la position déployée de la jambe correspond à un premier alignement de la première manivelle et de la première bielle, tandis que la position rétractée correspond à un deuxième alignement de la deuxième manivelle et de la deuxième bielle. Le premier alignement permet de stabiliser l'organe de contreventement en position alignée, et donc la jambe en position déployée, tandis que le deuxième alignement stabilise la jambe en position rétractée, ce qui supprime tout recours à un boîtier d'accrochage.

Par alignement d'une manivelle et de sa bielle associée, on entend ici que les deux éléments sont dans une position telle que leur axe d'articulation, l'axe d'attelage de la bielle sur l'atterrisseur et l'axe de rotation de la manivelle soient contenus sensiblement dans un même plan. Cependant, et comme cela est bien connu, la stabilisation d'un alignement peut être obtenue en dépassant légèrement la position parfaitement alignée pour faire venir les deux éléments dans une position très légèrement désalignée (overcentered en anglais) définie par des butées entre lesdits éléments. Ces positions en butée sont maintenues par le couple résiduel de l'actionneur lorsqu'il n'est pas alimenté (couple électromagnétique dû aux aimants permanents pour un actionneur électromagnétique, ou couple dû à l'emprisonnement de fluide dans les chambres de l'actionneur, pour un actionneur hydraulique). Cette disposition permet donc d'éviter tout recours à un organe de verrouillage auxiliaire, l'alignement de chaque couple bielle/manivelle en tenant lieu.

### DESCRIPTION DES FIGURES

L'invention sera mieux comprise à la lumière de la description qui suit d'un mode particulier de réalisation de l'invention, en référence aux figures des dessins annexés, parmi lesquelles :
- les figures 1 et 2 sont des vue en perspective d'un atterrisseur équipé selon l'invention d'un actionneur à deux manivelles, représenté en position déployée et en position rétractée respectivement ;
- les figures 3 à 6 sont des vues de côté de l'atterrisseur de la figure 1, respectivement en position déployée, au début du relevage, en cours de relevage, et en position rétractée ;
- la figure 7 est une vue en perspective de détail montrant l'alignement entre une manivelle et la bielle associée ;
- la figure 8 est une vue en coupe d'une butée élastique montée sur le plafond de la soute pour coopérer avec la contrefiche quand l'atterrisseur est en position rétractée ;
- la figure 9 est une vue de côté de l'atterrisseur en position rétractée, la contrefiche venant en appui contre la butée élastique.

### DESCRIPTION DETAILLEE DE L'INVENTION

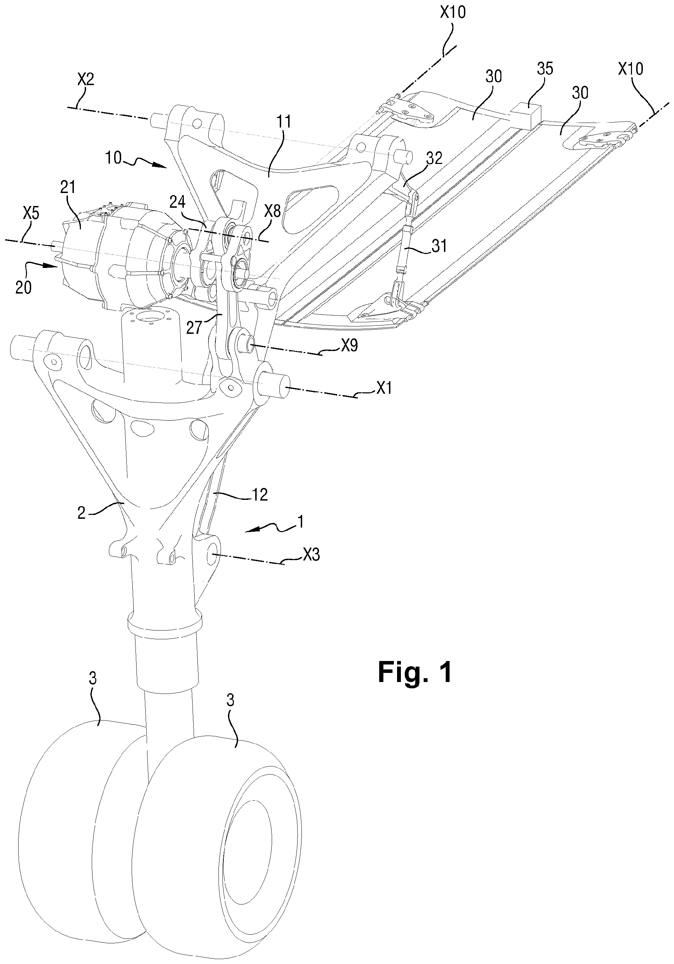

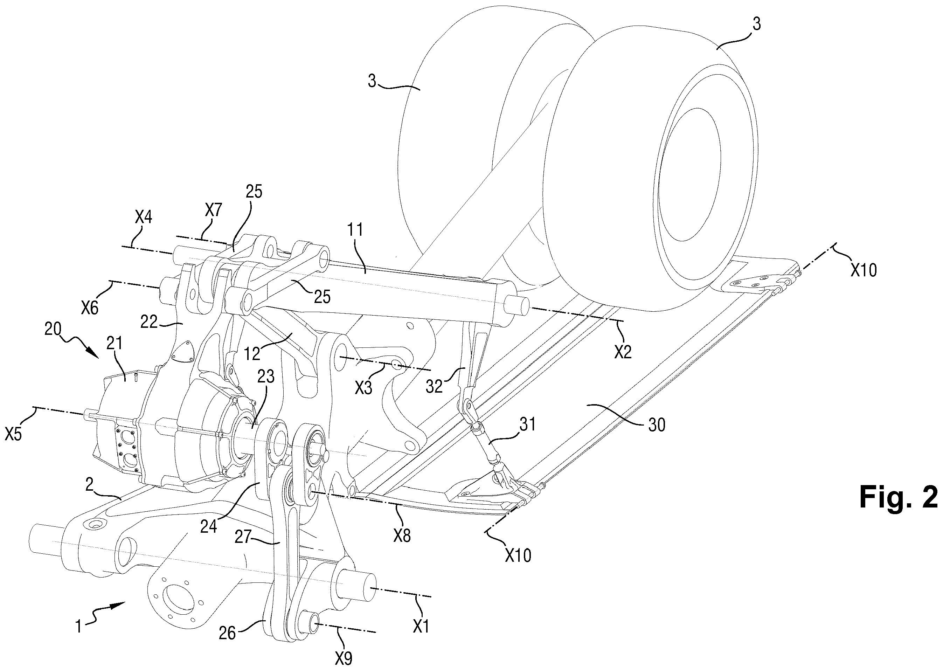

En référence aux figures 1 et 2, l'invention s'applique ici à un atterrisseur 1 comportant une jambe 2 portant des roues 3 en partie basse et articulée sur une structure d'un aéronef selon un axe d'articulation X1 sensiblement horizontal en service. La jambe est mobile entre une position déployée illustrée ici et une position rétractée visible à la figure 2. La jambe 2 est stabilisée en position déployée au moyen d'un organe de contreventement 10 comportant deux membres articulées entre eux, en l'occurrence un panneau 11 articulé sur la structure de l'aéronef selon un axe d'articulation X2 et un bras 12 articulé sur la jambe 2 et sur le panneau 11 selon des axes d'articulation respectifs X3 et X4. Dans la position déployée, le bras 12 et le panneau 11 sont en position sensiblement alignée.

Selon l'invention, on prévoit un actionneur rotatif 20 monté à libre rotation sur la structure de l'aéronef selon un axe de rotation X5 parallèle aux axes d'articulation X1 à X4. L'actionneur rotatif comporte un carter 21 muni d'un appendice formant une première manivelle 22, et comporte un arbre 23 monté tournant selon l'axe de rotation X5 et portant une deuxième manivelle 24. La position angulaire relative entre les deux manivelles 22,24 peut être modifiée en alimentant l'actionneur pour faire tourner l'arbre 23 relativement au carter 21, et peut être fixée et maintenue grâce au couple résiduel de l'actionneur 20 quand il n'est pas alimenté. La première manivelle 22 est ici attelée au panneau 11 de l'organe de contreventement 10 au moyen d'une première bielle 25 (ici une double bielle s'étendant de part et d'autre de l'extrémité du panneau 11) articulée sur la première manivelle 22 selon un axe d'articulation X6 et articulée sur le panneau 11 selon un axe d'articulation X7, tandis que la deuxième manivelle 24 est attelée à la jambe 2, plus précisément sur une corne 26 de celle-ci, au moyen d'une deuxième bielle 27 articulée sur la deuxième manivelle 24 selon un axe d'articulation X8 et articulée sur la corne 26 selon un axe d'articulation X9. Ici, tous les axes X1 à X9 sont parallèles entre eux.

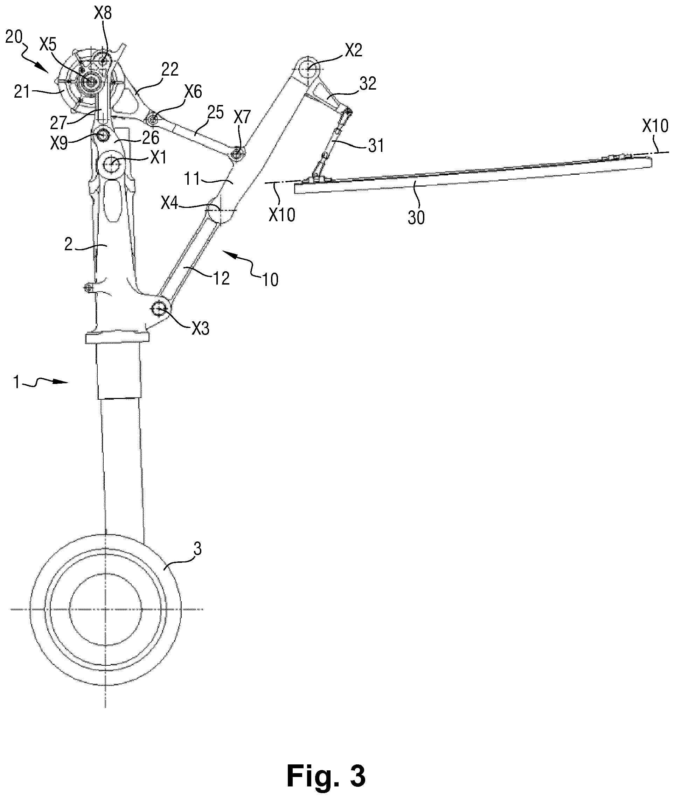

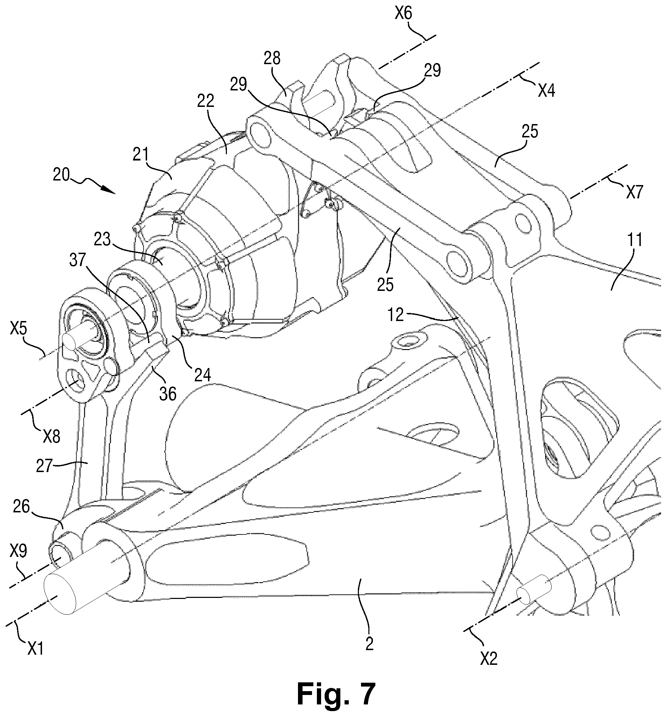

Une telle disposition lie de façon univoque la position angulaire relative des manivelles 22,24 et la position angulaire de la jambe 2 relativement à la structure de l'aéronef. Dans la position illustrée à la figure 3, dans lequel la jambe 2 est en position déployée, la position angulaire relative des manivelles est telle que la première manivelle 22 et la première bielle 25 sont dans une position sensiblement alignée, dite premier alignement. Plus précisément, le premier alignement est une position obtenue en faisant passer la première manivelle 22 et la première bielle 25 légèrement au-delà de leur l'alignement géométrique (qui est défini par l'alignement parfait des axes X5,X6,X7 dans un même plan) pour les faire venir sur des butées respectives. Comme visible sur la figure 7, la butée se présente sous la forme de doigts 28 s'étendant à l'extrémité de la première manivelle et venant en appui contre des obstacles 29 solidaires de la premier bielle 25 qui s'étendent en regard des doigts 28 et qui forment un arrêt définissant le premier alignement. De même, la deuxième bielle 27 comporte un doigt 36 qui vient en appui contre un obstacle 37 solidaire de la deuxième manivelle 24 (ici une broche 36). Sur la figure 7, la deuxième manivelle 25 et la deuxième bielle 27 sont dans la position de deuxième alignement, dans laquelle le doigt 36 est en appui contre l'obstacle 37.

Revenant à la figure 3, on notera que la première manivelle 22 ne peut tourner, puisque, l'actionneur 20 n'étant pas alimenté, son couple résiduel empêche le carter 21 et l'arbre 23 de tourner relativement l'un à l'autre, et les solidarise donc en rotation. Or l'arbre 23 est bloqué par la deuxième manivelle 24, elle-même bloquée en rotation par son attelage à la jambe 2 via la deuxième bielle 27, qui n'est pas alignée avec la deuxième manivelle 24.

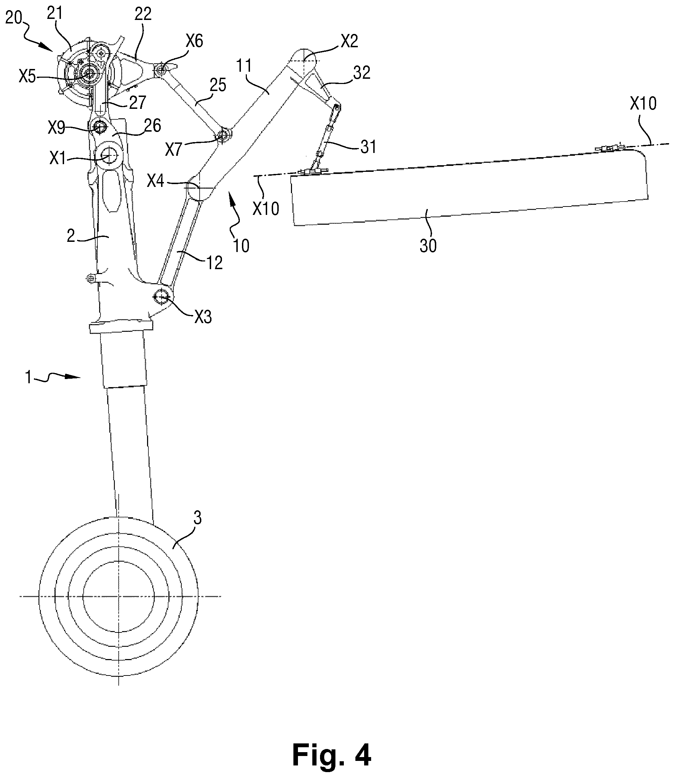

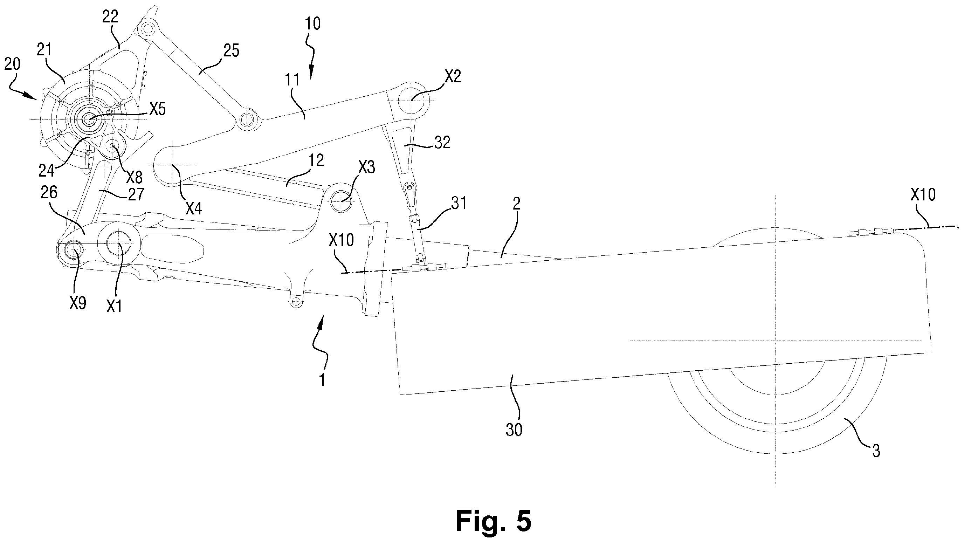

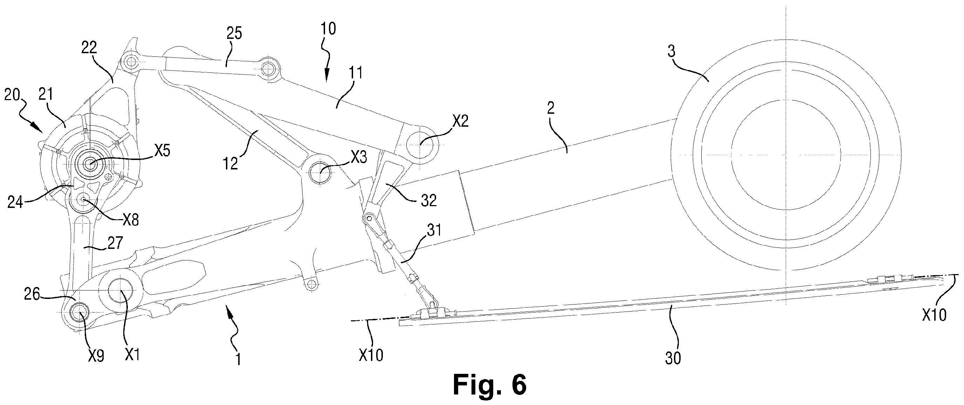

Pour relever la jambe 2 vers la position rétractée, on alimente l'actionneur 20 pour faire tourner l'arbre 23, et donc modifier la position angulaire relative des manivelles 22,24. Comme illustré à la figure 4, cette rotation a pour premier effet de briser l'alignement de la première manivelle 22 et la première bielle 24, et donc de briser l'alignement du panneau 11 et du bras 12 de l'organe de contreventement 10. L'atterrisseur 2 n'est donc plus stabilisé en position déployée et la jambe peut est relevée vers la position rétractée. L'actionneur 20 continuant à être alimenté, la jambe 2 continue à remonter et arrive dans une position intermédiaire illustrée à la figure 5 dans laquelle la première bielle 25 tire sur le panneau 11 tandis que la deuxième bielle 27 pousse sur la jambe 2, ce qui a pour effet de faire remonter celle-ci vers la position rétractée illustrée à la figure 6, dans laquelle les manivelles sont dans une position angulaire relative telle que la deuxième manivelle 24 et la deuxième bielle 27 arrivent dans une position sensiblement alignée, dite deuxième alignement. De la même façon que pour le premier alignement, le deuxième alignement est en fait une position obtenue en faisant passer la deuxième manivelle 24 et la deuxième bielle 27 légèrement au-delà de l'alignement géométrique (définie par l'alignement parfait des axes X5,X8,X9 dans un même plan) pour les faire venir sur des butées respectives. Cet alignement bloque la jambe 2 en position rétractée, de sorte que cette position est stable et ne nécessite pas l'utilisation d'un boîtier d'accrochage.

Selon un aspect particulier de l'invention, on attelle à l'atterrisseur les portes 30 articulées sur la structure de l'aéronef selon des axes X10 et qui ferment la soute dans laquelle l'atterrisseur se loge en position rétractée par des biellettes 31 directement attelées à des cornes 32 saillant du panneau 11 de l'organe de contreventement 10. Pour faciliter la compréhension de l'invention, on n'a pas représenté la trappe pantalon qui est attelée à la jambe et qui ferme la soute en complément des deux portes 30 quand l'atterrisseur est en position rétractée, et qui reste ouverte quand l'atterrisseur est en position déployée. Dans les deux positions de l'atterrisseur illustrées aux figures 1, 2, 3, 6, on remarque que les portes 30 sont en position fermée alors qu'elles s'ouvrent lors de la manœuvre de l'atterrisseur, comme cela est visible sur les figures 4,5. Le maintien des portes en position fermée nécessite d'installer une précontrainte dans les portes 30 pour être certain qu'elles ne bailleront pas en vol sous l'effet des efforts aérodynamiques. A cet effet, la longueur des biellettes 31 est ajustée de sorte que dans chacune des positions rétractée ou déployée de l'atterrisseur, les portes 30 viennent en appui sur une butée 35 (visible à la figure 1) solidaire de la structure de l'aéronef un peu avant que l'ensemble bielle/manivelle en alignement, et en particulier, un peu avant le passage par la position d'alignement géométrique qui précède. La venue des portes 30 contre la butée 35 impose alors de tirer sur les biellettes pour précontraindre les portes 30, qui agissent alors comme des ressorts de rappel confirmant l'ensemble bielle/manivelle sur sa butée interne, et donc confirmant l'alignement de celui-ci.

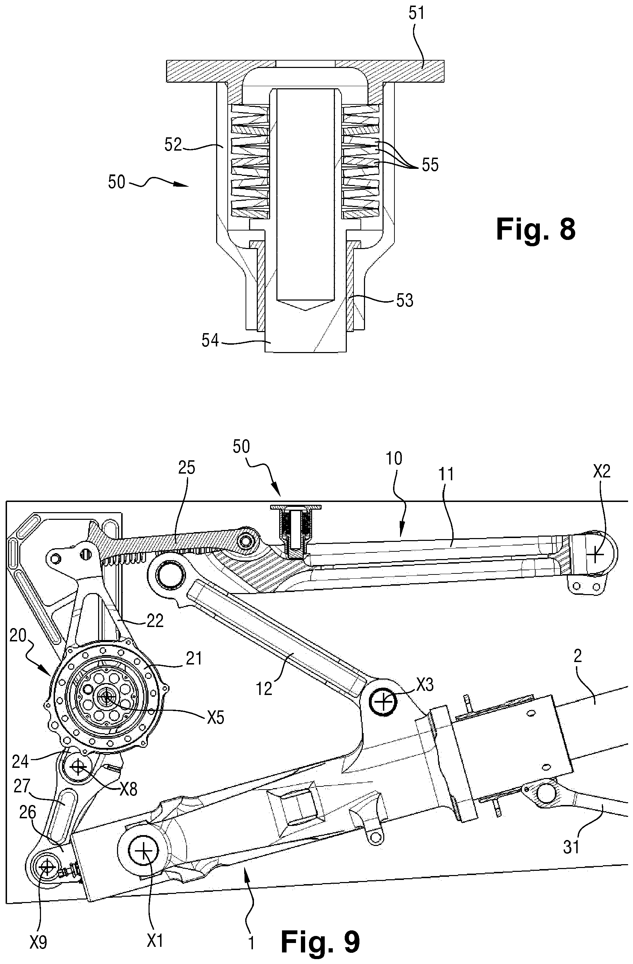

Pour compléter la précontrainte induite par la fermeture des portes, ou pour remplacer celle-ci si les portes ne sont pas attelées à l'atterrisseur, il est possible d'utiliser une autre source externe de précontrainte, comme par exemple une butée élastique 50 illustrée à la figure 8. La butée élastique comporte un socle 51 destiné à être fixé sur le plafond de la soute. Le socle 51 porte un corps creux 52 muni d'une ouverture terminale portant un guide 53. Un piston 54 est monté coulissant dans le guide 53 pour saillir du corps 52. Le piston 54 est poussé vers une position en saillie visible à la figure 8 par des rondelles élastiques Belleville 55 positionnées à l'intérieur du corps creux 52 qui exercent une précontrainte sur le piston 54. Pour faire rentrer le piston 54, il convient d'exercer sur celui-ci un effort au moins égal à la précontrainte installée par les rondelles Belleville 55.

Comme cela est visible à la figue 9, la butée élastique 50 est positionnée sur le plafond de la soute de l'atterrisseur de façon qu'une portion de l'organe de contreventement, en l'occurrence ici le panneau de contrefiche 11, vienne en butée contre le piston 54 quand l'atterrisseur arrive en position rétractée, avant que la deuxième manivelle 24 et la deuxième bielle 27 n'arrivent dans l'alignement géométrique précédant la position dite de deuxième alignement. Ainsi, pour passer l'alignement géométrique et aller au-delà pour atteindre le deuxième alignement, le panneau de contrefiche 11 doit repousser le piston 54 à l'encontre de la précontrainte installée par les rondelles Belleville 55. De cette façon, la précontrainte des rondelles Belleville est transmise au panneau de contrefiche 11, de la même façon que la précontrainte des portes était transmise au panneau de contrefiche via les cornes 32.

Bien entendu, la précontrainte des portes et/ou de la butée élastique pourra être transmise à un autre endroit de l'atterrisseur que le panneau de contrefiche, par exemple directement au caisson de l'atterrisseur. La précontrainte peut également être exercée par un ou des ressorts internes qui confirment la deuxième manivelle 24 et la deuxième bielle 27 dans leur deuxième alignement.

L'invention n'est pas limitée à ce qui vient d'être décrit, mais englobe au contraire toute variante entrant dans le cadre défini par les revendications.

En particulier, bien qu'ici tous les axes d'articulation soient parallèles entre eux, l'invention s'applique naturellement à des cinématiques à axes non parallèles, du moment que chaque ensemble bielle/manivelle de l'actionneur vienne en alignement lorsque la jambe est dans l'une des positions déployée ou rétractée.

## Revendications

1. Procédé de manœuvre d'un atterrisseur d'aéronef entre une position déployée et une position rétractée, l'atterrisseur comportant une jambe (2) montée articulée sur une structure de l'aéronef pour être mobile entre la position déployée et la position rétractée, en étant stabilisée en position déployée au moyen d'un organe de contreventement (10) comportant deux membres (11,12) articulés entre eux dont l'un est attelé à la jambe et l'autre attelé à la structure de l'aéronef, et amenés en position alignée lorsque la jambe est en position déployée, **caractérisé en ce que** l'on agence sur l'aéronef un actionneur rotatif (20) comportant des première et seconde manivelles (22,24) montées librement tournantes autour d'un même axe de rotation mais dont la position angulaire relative est commandable, la première manivelle (22) étant reliée à l'organe de contreventement par une première bielle (25) tandis que la deuxième manivelle (24) est reliée à la jambe par une deuxième bielle (27), de sorte que les manivelles présentent :
- une première position angulaire relative dans laquelle la première manivelle (22) et la première bielle (25) sont amenées dans un premier alignement lorsque la jambe est en position déployée et stabilisent ainsi les membres de l'organe de contreventement en position sensiblement alignée ;
- une deuxième position angulaire relative dans laquelle la deuxième manivelle (24) et la deuxième bielle (27) sont amenées dans un deuxième alignement lorsque la jambe est en position rétractée et stabilisent ainsi la jambe dans la position rétractée.

2. Procédé selon la revendication 1, dans lequel le premier alignement et le deuxième alignement sont définis par des butées entre la manivelle et la bielle associée.

3. Procédé selon la revendication 1, dans lequel on attelle à l'organe de contreventement des portes (30) fermant la soute dans laquelle l'atterrisseur se loge en position rétractée, les portes étant en position fermée lorsque l'atterrisseur est en position déployée et en position rétractée.

4. Procédé selon la revendication 3, dans lequel on installe une précontrainte dans les portes (30) quand elles sont en position fermée, de sorte que cette précontrainte confirme l'alignement de l'ensemble bielle/manivelle concerné.

5. Procédé selon la revendication 1, dans lequel on place sur la structure de l'aéronef une butée élastique (50) de sorte qu'une partie de l'atterrisseur (11) viennent en contact contre la butée et exerce sur l'atterrisseur une précontrainte confirmant l'alignement de la deuxième bielle et de la deuxième manivelle lorsque l'atterrisseur est en position rétractée.

6. Procédé selon la revendication 5, dans lequel la butée comporte un piston (54) maintenu en saillie d'un corps (52) par l'action de rondelles Belleville (55) installant une précontrainte sur le piston (54), et sur lequel une portion (11) de l'organe de contreventement vient en appui lors que l'atterrisseur est en position rétractée.

## Patentansprüche

1. Verfahren zum Manövrieren eines Luftfahrzeugfahrwerks zwischen einer ausgefahrenen Position und einer eingefahrenen Position, wobei das Fahrwerk ein Bein (2) umfasst, das an einer Struktur des Luftfahrzeugs angelenkt ist, um zwischen der ausgefahrenen Position und der eingefahrenen Position beweglich zu sein, und dabei in der ausgefahrenen Position mittels eines Verstrebungsorgans (10) stabilisiert wird, das zwei Glieder (11, 12) umfasst, die aneinander angelenkt sind, wobei eines davon an das Bein gekoppelt ist und das andere an die Struktur des Luftfahrzeugs gekoppelt ist, und die in eine fluchtende Position gebracht werden, wenn das Bein in der ausgefahrenen Position ist, **dadurch gekennzeichnet, dass** man an dem Luftfahrzeug einen Drehaktor (20) anordnet, der eine erste und eine zweite Kurbel (22, 24) umfasst, die um eine selbe Drehachse frei drehbar gelagert sind, deren relative Winkelposition jedoch steuerbar ist, wobei die erste Kurbel (22) mit dem Verstrebungsorgan durch eine erste Verbindungsstange (25) verbunden ist, während die zweite Kurbel (24) mit dem Bein durch eine zweite Verbindungsstange (27) verbunden ist, sodass die Kurbeln aufweisen:
- eine erste relative Winketposition, in der die erste Kurbel (22) und die erste Verbindungsstange (25) in eine erste Fluchtstellung gebracht sind, wenn das Bein in der ausgefahrenen Position ist, und so die Glieder des Verstrebungsorgans in einer im Wesentlichen fluchtenden Position stabilisieren;
- eine zweite relative Winkelposition, in der die zweite Kurbel (24) und die zweite Verbindungsstange (27) in eine zweite Fluchtstellung gebracht sind, wenn das Bein in einer eingefahrenen Position ist, und so das Bein in der eingefahrenen Position stabilisieren.

2. Verfahren nach Anspruch 1, bei dem die erste Fluchtstellung und die zweite Fluchtstellung durch Anschläge zwischen der Kurbel und der dazugehörigen Verbindungsstange definiert sind.

3. Verfahren nach Anspruch 1, bei dem man an das Verstrebungsorgan Türen (30) koppelt, die den Fahrwerkschacht verschließen, in dem das Fahrwerk in der eingefahrenen Position aufgenommen ist, wobei die Türen in der geschlossenen Position sind, wenn das Fahrwerk in der ausgefahrenen Position und in der eingefahrenen Position ist.

4. Verfahren nach Anspruch 3, bei dem man eine Vorspannung an den Türen (30) anlegt, wenn sie in der geschlossenen Position sind, sodass diese Vorspannung die Fluchtstellung der betreffenden Einheit aus Verbindungsstange/Kurbel bestätigt.

5. Verfahren nach Anspruch 1, bei dem man an der Struktur des Luftfahrzeugs einen elastischen Anschlag (50) derart platziert, dass ein Teil des Fahrwerks (11) mit dem Anschlag in Kontakt kommt und auf das Fahrwerk eine Vorspannung ausübt, die die Fluchtstellung der zweiten Verbindungsstange und der zweiten Kurbel bestätigt, wenn das Fahrwerk in der eingefahrenen Position ist.

6. Verfahren nach Anspruch 5, bei dem der Anschlag einen Kolben (54) umfasst, der durch die Wirkung von Belleville-Tellerfedern (55), die eine Vorspannung an dem Kolben (54) anlegen, vorstehend von einem Gehäuse (52) gehalten wird, und an dem ein Abschnitt (11) des Verstrebungsorgans zur Anlage kommt, wenn das Fahrwerk in der eingefahrenen Position ist.

## Claims

1. A method of driving an aircraft undercarriage between a deployed position and a retracted position, the undercarriage having a leg (2) hinged to a structure of the aircraft to be movable between the deployed position and the retracted position, being stabilized in the deployed position by means of a brace member (10) comprising two limbs (11, 12) that are hinged to each other, one of which is coupled to the leg and the other of which is coupled to the structure of the aircraft, and which are taken to an aligned position when the leg is in the deployed position, the method being **characterized in that** a rotary actuator (20) is arranged on the aircraft, the actuator having first and second cranks (22, 24) mounted to turn freely about a common axis of rotation but presenting a relative angular position that can be controlled, the first crank (22) being connected to the brace member by a first connecting rod (25), while the second crank (24) is connected to the leg by a second connecting rod (27), such that the cranks present:
- a first relative angular position in which the first crank (22) and the first connecting rod (25) are brought into a first alignment when the leg is in the deployed position, thereby stabilizing the limbs of the brace member in a substantially aligned position; and
- a second relative angular position in which the second crank (24) and the second connecting rod (27) are brought into a second alignment while the leg is in the retracted position, thereby stabilizing the leg in the retracted position.

2. A method according to claim 1, wherein the first alignment and the second alignment are defined by abutments between the crank and the associated connecting rod.

3. A method according to claim 1, wherein doors (30) are coupled to the brace member, which doors close the well in which the undercarriage is housed when in the retracted position, the doors being in the closed position when the undercarriage is in the deployed position and also when it is in the retracted position.

4. A method according to claim 3, wherein prestress is established on the doors (30) when they are in the closed position so that the prestress confirms the alignment of the crank and connecting rod assembly that is concerned.

5. A method according to claim 1, wherein a resilient abutment (50) is placed on the structure of the aircraft in such a manner that a portion of the undercarriage (11) comes into contact against the abutment and exerts prestress on the undercarriage confirming the alignment of the second connecting rod and of the second crank when the undercarriage is in the retracted position.

6. A method according to claim 5, wherein the abutment comprises a piston (54) held projecting from a body (52) by the action of Belleville washers (55) imparting prestress on the piston (54), with a portion (11) of the brace member coming to bear thereagainst when the undercarriage is in the retracted position.
